(19) Europäisches Patentamt / European Patent Office / Office européen des brevets

(11) **EP 2 043 044 B1**

(12) **FASCICULE DE BREVET EUROPEEN**

(45) Date de publication et mention
de la délivrance du brevet:
**26.05.2010 Bulletin 2010/21**

(51) Int Cl.:
**G06T 7/00** *(2006.01)*  **B60W 40/02** *(2006.01)*

(21) Numéro de dépôt: **08305577.2**

(22) Date de dépôt: **22.09.2008**

(54) **Procédé et dispositif d'assistance au parcage d'un véhicule automobile**

Verfahren und Vorrichtung zur Einparkhilfe eines Kraftfahrzeugs

Method and device for automobile parking assistance

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **25.09.2007 FR 0706758**

(43) Date de publication de la demande:
**01.04.2009 Bulletin 2009/14**

(73) Titulaire: **Renault S.A.S.
92100 Boulogne-Billancourt (FR)**

(72) Inventeurs:
• **Boyer, Jean-Philippe
75015 Paris (FR)**
• **Cornou, Sebastien
91940, Les Ulis (FR)**

(56) Documents cités:
**EP-A- 1 094 337      EP-A- 1 467 225
EP-A- 1 724 726      WO-A-2007/031379
DE-A- 10 244 148     DE-A-102006 011 590
FR-A- 2 771 500**

## Description

L'invention concerne un procédé de détection d'un emplacement libre pour parquer un véhicule automobile, un dispositif associé pour mettre en oeuvre ce procédé et un véhicule automobile en tant que tel équipé d'un tel dispositif.

Dans l'état de la technique, il existe des dispositifs de détection d'emplacements qui comprennent un ou plusieurs capteurs qui sont des télémètres infrarouges ou à ultrasons. Ils émettent un signal en direction des véhicules stationnés et analysent le signal renvoyé. Une carte électronique mesure la durée écoulée entre l'instant d'émission du signal et l'instant de réception du signal réfléchi et en déduit la distance. La distance entre le capteur et l'obstacle peut également être calculée par triangulation. Un inconvénient de ces dispositifs existants est que le signal réfléchi reçu par le capteur dépend fortement des caractéristiques géométriques et photométriques de la cible qui le réfléchit. En effet, la cible est généralement constituée par un véhicule, mais peut également être un trottoir, une borne, un véhicule à deux roues ou tout autre objet pouvant se trouver sur la voie publique. De plus, les capteurs utilisés ne fonctionnent qu'à faible portée et à faible résolution angulaire, et pour des vitesses de déplacement réduites.

Pour pallier à ces inconvénients, le document FR2771500 décrit une autre solution basée sur deux caméras placées latéralement sur un véhicule, regardant respectivement à droite et à gauche du véhicule. Sur la base de l'analyse des images recueillies et de la connaissance de la vitesse du véhicule, il est possible d'en déduire l'éloignement des objets observés par rapport à la caméra. On est ainsi capable de reconstruire un profil en profondeur des objets placés sur les côtés du véhicule vus par les caméras. Ce procédé reste toutefois insuffisamment précis.

D'autres documents, par exemple DE102006011590 ou US20070165908 décrivent des solutions dans laquelle une caméra est montée sur un véhicule automobile et qui permettent de déduire la distance des objets observés en fonction du déplacement du véhicule. Toutefois, ces procédés selon le préambule de la revendication 1 restent imparfaits et présentent des problèmes de justesse des résultats fournis notamment dans des conditions de visibilité défavorables.

La présente invention a pour objet de proposer un procédé de détection d'emplacements libres amélioré, particulièrement adapté pour un véhicule automobile.

A cet effet, l'invention repose sur un procédé de détection d'un emplacement pour parquer un véhicule automobile, comprenant une étape de réception de plusieurs images provenant d'une caméra positionnée sur le véhicule automobile, et une étape de réception d'une donnée informant de l'avancée du véhicule automobile à partir d'au moins un capteur positionné sur le véhicule automobile, et une étape de calcul de la disparité entre deux images fournies par la caméra pour en déduire la distance d'un obstacle au véhicule automobile, caractérisé en ce qu'il met en oeuvre un filtrage temporel en ne prenant en compte que les obstacles qui apparaissent sur au moins deux images distinctes obtenues par la caméra à deux instants distincts, et en ce qu'il comprend une étape d'élaboration d'une grille d'occupation comprenant le découpage en plusieurs cases de l'espace vu du dessus, et en l'attribution d'une valeur dans chaque case élaborée à partir des résultats des différents obstacles identifiés à l'étape précédente.

Selon un mode d'exécution, l'étape de calcul de la disparité entre deux images permet de déduire une estimation de la distance d'un point d'un obstacle à partir des deux coordonnées (u0 et u1) de ce point sur les deux images obtenues par la caméra, à partir de la distance focale (f) de la caméra et à partir du déplacement (D) du véhicule entre les deux images, par l'équation f/d = I u1-u0 I/D.

La valeur attribuée à un instant à une case donnée à cette étape peut correspondre à l'accumulation de valeurs obtenues à plusieurs instants différents. Le procédé peut comprendre une étape supplémentaire de décision de la présence d'un obstacle dans une certaine case de la grille d'occupation quand la valeur attribuée à cette case dépasse un seuil prédéfini.

Selon un mode d'exécution, le procédé de détection d'un emplacement pour parquer un véhicule automobile peut comprendre une étape préalable de correction de la distorsion introduite par l'optique de la caméra sur les bords de l'image, ou une étape préalable de correction de l'image pour tenir compte du fait que l'orientation de la caméra n'est peut-être pas exactement perpendiculaire à un axe longitudinal avant-arrière du véhicule.

Le procédé peut comprendre une étape finale de détection des places libres compatibles avec le gabarit du véhicule automobile.

Enfin, le procédé de détection d'un emplacement pour parquer un véhicule automobile peut comprendre une étape supplémentaire d'interface homme machine incluant la mise en valeur sur un écran visualisé par le conducteur d'une place libre sur l'image obtenue par au moins une caméra.

L'invention porte aussi sur un dispositif de détection d'un emplacement pour parquer un véhicule automobile comprenant au moins une caméra latérale, au moins un capteur permettant de mesurer le déplacement du véhicule automobile, et un calculateur, **caractérisé en ce que** le calculateur comprend un programme informatique apte à mettre en oeuvre le procédé tel que décrit précédemment.

L'invention porte aussi sur un véhicule automobile **caractérisé en ce qu'il** comprend un dispositif de détection d'un emplacement pour parquer un véhicule automobile tel que décrit précédemment.

Ces objets, caractéristiques et avantages de la présente invention seront exposés en détail dans la description suivante d'un mode d'exécution particulier fait à titre non-limitatif en relation avec les figures jointes parmi lesquelles :

La figure 1 représente une vue schématique d'un dispositif selon un mode d'exécution de l'invention ;
les figures 2 et 3 représentent une vue schématique du principe de calcul selon le mode d'exécution de l'invention ;
la figure 4 représente l'algorithme mis en oeuvre selon le procédé du mode d'exécution de l'invention ;
les figures 5a et 5b représentent à titre d'exemple un scénario de mise en oeuvre du procédé selon le mode d'exécution de l'invention ;
les figures 6a et 6b représentent les images obtenues dans le scénario précédent ;
les figures 7a et 7b représentent les grilles d'occupation construites par le procédé selon le mode d'exécution de l'invention dans le cas du scénario précédent.

L'invention propose un procédé et un dispositif de recherche d'emplacements libres dans lequel la détection des obstacles est effectuée par un traitement d'images utilisant une méthode de calcul de disparité.

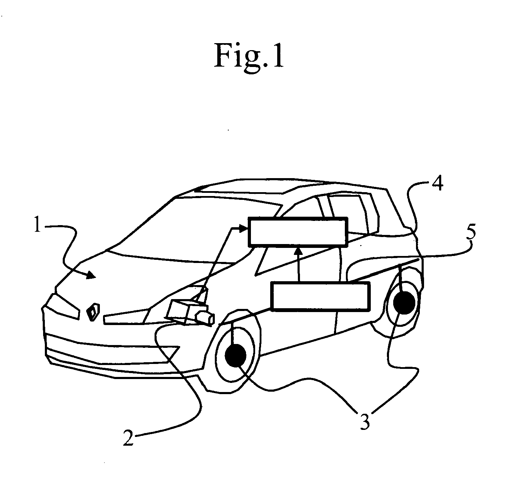

La figure 1 illustre l'implémentation d'un dispositif sur un véhicule automobile 1, comprenant une caméra latérale 2 gauche, qui peut être logée dans les phares avant ou dans les rétroviseurs, des capteurs odométriques 3 permettant d'obtenir des données proprioceptives du véhicule, telle que la distance parcourue par les roues, et un calculateur 4 qui reçoit les images recueillies par la caméra 2 et les données proprioceptives du véhicule, par l'intermédiaire d'une liaison interne 5. Ce calculateur 4 effectue un traitement d'image afin d'extraire la position tridimensionnelle des obstacles. En sortie du dispositif, la présence d'une place de parking suffisamment grande peut être signalée. Pour cela, le calculateur 4 met en oeuvre un algorithme dont le procédé sera décrit plus loin.

La caméra 2 est rigidement accrochée au véhicule et observe l'environnement extérieur au véhicule dans une direction perpendiculaire à l'axe longitudinal avant-arrière du véhicule 1. Les images recueillies par la caméra peuvent être en niveau de gris ou en couleurs. Une autre caméra non représentée est symétriquement disposée sur le flanc droit du véhicule.

Les données proprioceptives du véhicule peuvent être transmises par le réseau de bord 5 du véhicule, à partir d'un ou plusieurs capteurs, notamment un capteur 3 positionné au niveau des roues du véhicule pour mesurer le déplacement de ces dernières, voire les variations de l'orientation du véhicule.

Le procédé de détection d'obstacles et d'emplacements libres pour le véhicule automobile repose sur un traitement de l'image reçue par la ou les caméras 2, incorporant des données reçues par un ou plusieurs autres capteur 3.

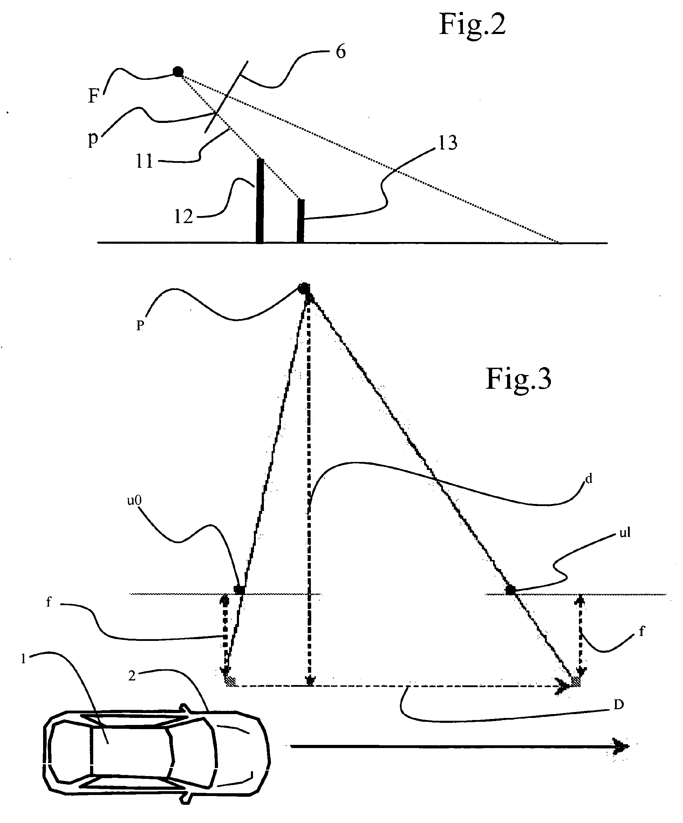

L'étape de traitement d'images repose sur un modèle projectif de caméra, comme cela est illustré sur la figure 2. A chaque instant, chaque pixel de l'image obtenue sur un écran 6 correspond à un ensemble de points réels situés sur la droite 11 passant par le point focal F de la caméra 2 et le pixel p sur l'écran 6 de l'image recueillie. Par exemple, le pixel p de l'écran 6 de la figure 2 correspond aux sommets des deux objets 12 et 13 recueillie à un instant t par la caméra 2.

Le traitement de l'image repose de plus sur une étape de calcul E3 de disparité, c'est-à-dire prenant en compte le déplacement apparent d'un point entre deux images à deux instants distincts. Cette approche dynamique permet un premier filtrage temporel, qui consiste à ne considérer que les obstacles qui sont détectés sur plusieurs images à des instants différents. Cette approche permet de plus de déduire une évaluation de la distance de chaque obstacle et de différencier les obstacles différents 12 et 13 qui sont regroupés sur le même pixel p à un certain instant. En effet, l'objet le plus rapproché 12 sera plus décalé que l'objet plus éloigné 13 sur une seconde image à un instant t+dt.

La figure 3 représente le principe du calcul de l'évaluation de la distance d d'un objet P ponctuel vu par une caméra 2 à deux instants successifs t et t+dt. Durant le faible intervalle de temps dt entre deux images considérées, selon un pas dt prédéterminé, la caméra 2, de longueur focale f, s'est déplacée d'une distance D qui correspond au déplacement du véhicule 1, qui est connu par les données transmises par les capteurs 3. Le traitement de l'image selon un procédé connu de mesure de disparité permet de connaître les coordonnées u0 et u1 du point P sur les deux images aux instants t et t+dt. L'application du théorème de Thalès permet d'établir l'équation suivante entre ces différentes données, qui permet d'en déduire une estimation de la distance d du point P :

$$f/d = | u1{-}u0 |/D$$

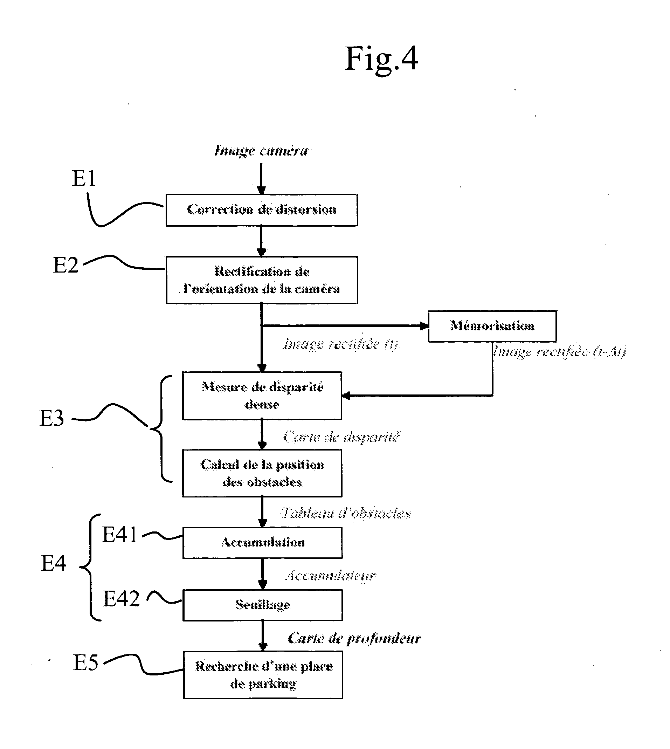

La figure 4 illustre plus précisément les différentes étapes du procédé selon le mode d'exécution de l'invention.

Dans une première étape E1, la distorsion introduite par l'optique de la caméra sur les bords de l'image est corrigée, selon une fonction de correction connue qui permet d'associer à chaque pixel non distordu un pixel de l'image distordue.

Dans une seconde étape E2, une nouvelle correction est effectuée pour tenir compte du fait que l'orientation de la caméra n'est peut-être pas exactement parallèle au déplacement du véhicule. Pour cela, l'image est corrigée pour obtenir une nouvelle image qui correspond à celle qui serait obtenue avec une caméra « virtuelle » effectivement parallèle à la trajectoire.

La troisième étape E3 met en oeuvre le calcul de disparité explicité ci-dessus et l'estimation de la distance de chaque obstacle identifié et plus généralement la position de chaque obstacle.

Les résultats de l'étape précédente E3 permettent de mémoriser une synthèse de l'environnement du véhicule dans une étape E4 sous la forme d'une grille d'occupation dont chaque case correspond à un point de l'espace vu du dessus. Cette grille, aussi appelée accumulateur, regroupe une valeur dans chaque case qui représente la présence ou non d'un obstacle. Initialement, la grille est vide et au fur et à mesure de l'avancée du véhicule, on incrémente la valeur de chaque case selon une règle prédéfinie en fonction des objets identifiés, dans une première sous-étape E41. Quand on obtient une valeur qui dépasse un certain seuil prédéfini, il est conclu qu'un objet est présent, dans une seconde sous-étape E42. Ce procédé permet ainsi de tenir compte de plusieurs images successives pour obtenir la décision de présence d'un objet, ce qui est un moyen de mettre en oeuvre un filtrage temporel qui améliore la justesse du résultat obtenu, notamment dans des conditions de luminosité défavorable (obscurité, éblouissement, etc.). L'accumulateur est mis à jour au fur et à mesure de l'avancée du véhicule.

Enfin, dans une ultime étape E5, le calculateur détermine à partir de la connaissance du gabarit du véhicule et de l'accumulateur s'il existe un emplacement dont la profondeur et les dimensions globales sont compatibles avec ce gabarit, pour représenter une place de parking disponible.

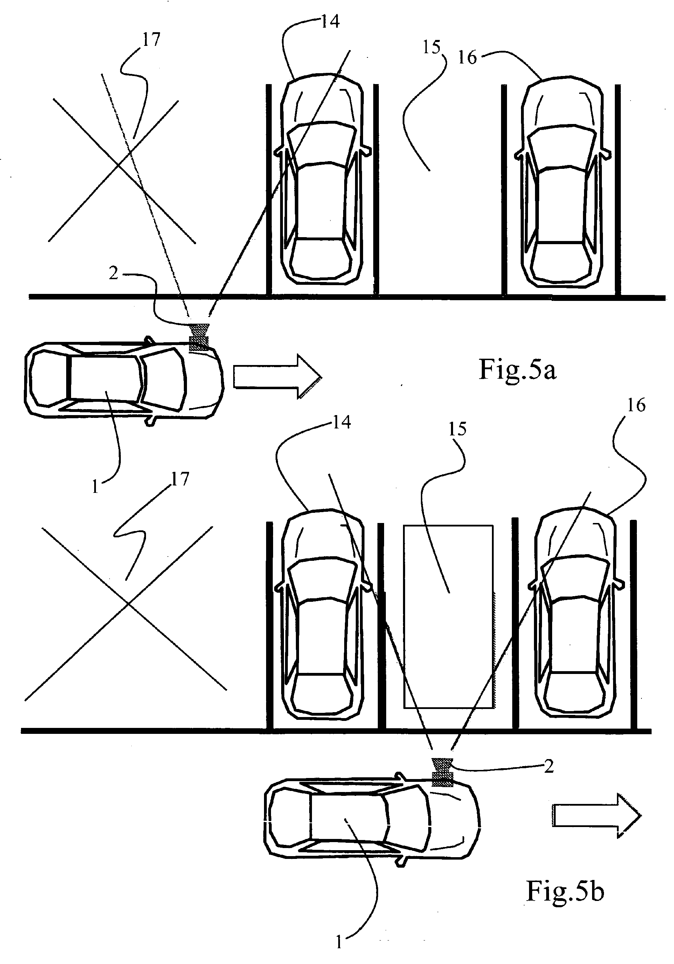

Les figures 5 à 7 illustrent la mise en oeuvre de cet algorithme dans le cas d'un scénario particulier. La figure 5a représente un véhicule 1 équipé d'un dispositif selon l'invention, à un instant t pour lequel sa caméra 2 gauche visualise une image de places de stationnement disposées sur la gauche de la route. L'environnement comprend une place libre 15 entourée de deux places occupées 14, 16, suivant une zone 17 occupée et non détaillée. La figure 5b représente la même configuration à un instant ultérieur t+dt pour lequel le véhicule 1 s'est déplacé vers la droite de la figure.

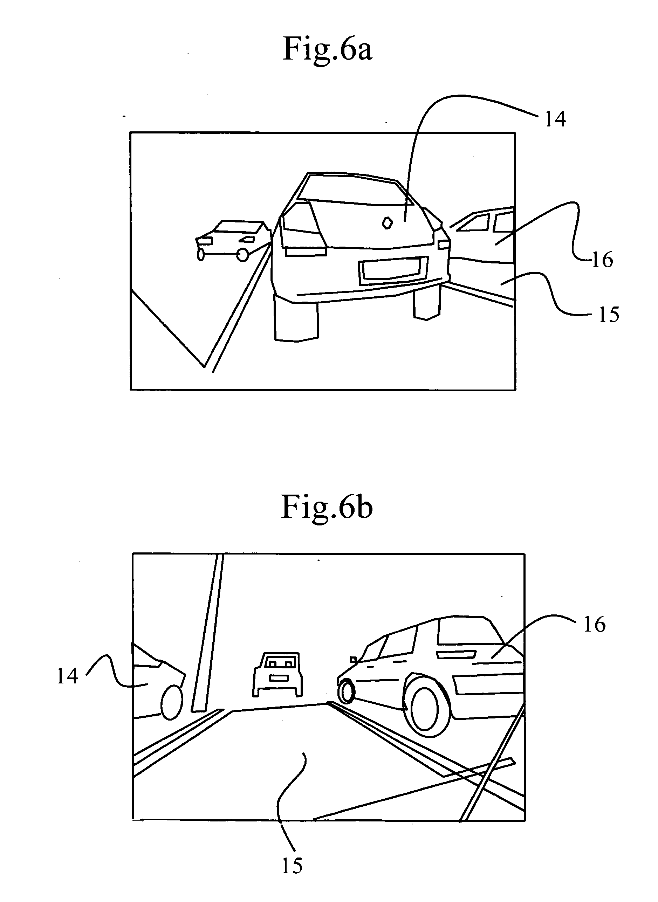

Les figures 6a et 6b représentent respectivement les images obtenues par la caméra 2 aux instants t et t+dt. Sur la figure 6a, l'image représente le parking avec une première place occupée 14, juste avant la seconde place occupée 16 alors qu'à l'instant t+dt illustré sur la figure 6b, l'image montre un emplacement libre 15 entre les deux places occupées 14, 16.

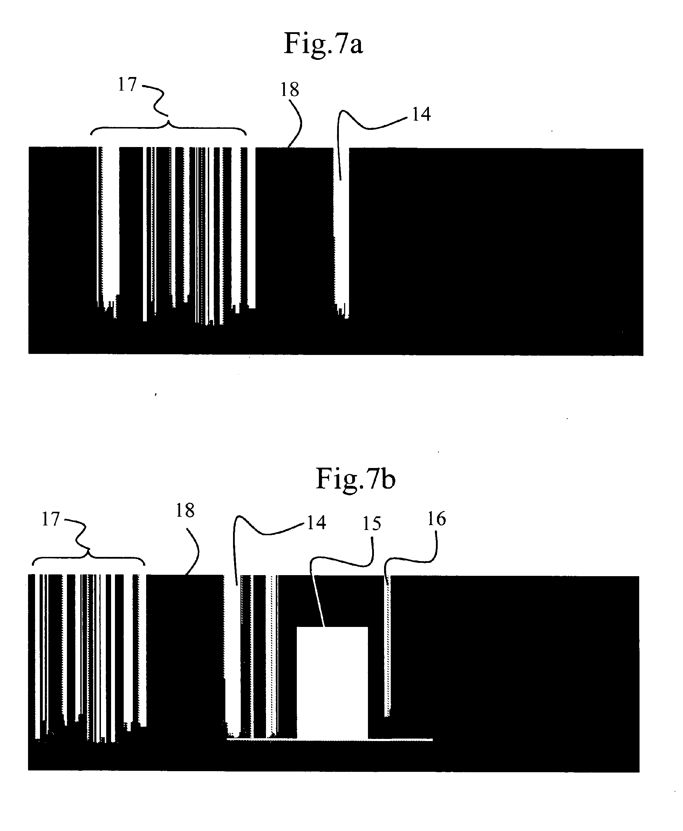

Les figures 7a et 7b représentent respectivement les grilles d'occupation construites par le procédé selon l'invention aux instant t et t+dt. Les parties en blanc représentent des valeurs au-delà du seuil prédéfini et représentent donc la présence d'un obstacle dans les zones correspondantes. Ainsi, la figure 7a montre une grille identifiant un premier véhicule 17 et la partie latérale gauche d'un second véhicule 14, qui commence progressivement à être identifiée dans l'accumulateur lors du déplacement du véhicule 1. Il existe un espace 18 entre ces deux véhicules, trop étroit pour représenter une place de stationnement. La figure 7b montre cette même grille à l'instant t+dt, sur laquelle on retrouve les deux véhicules stationnés 17, 14, décalés sur la gauche de la grille puisque le véhicule 1 se déplace vers la droite, ainsi que la partie latérale gauche d'un troisième véhicule 16. Entre les deuxième et troisième véhicules 14, 16, il y a un emplacement 15 dont les dimensions sont suffisantes pour permettre le positionnement du gabarit correspondant au véhicule 1 à garer. Cet emplacement est ainsi identifié comme un emplacement libre et représenté par un rectangle gris sur les figures 6b et 7b, ce qui représente une possible interface homme machine pour informer le conducteur du véhicule 1 de la présence de cette place disponible.

En variante d'exécution, l'algorithme décrit précédemment peut être légèrement modifié sans sortir du cadre de la présente invention. Les deux étapes E1 et E2 peuvent par exemple être supprimées dans une implémentation simplifiée et moins précise.

La solution décrite atteint donc bien l'objet recherché et présente les avantages suivants :

- elle permet d'atteindre une grande précision dans la mesure des places disponibles, même dans des circonstances de vitesse élevée ;
- elle ne comprend pas d'angles morts et peut prendre en compte tous les objets, comme des pots de fleur ou des arbres disposés au fond de la place;
- elle permet une représentation visuelle intéressante par la mise en valeur de la place libre identifiée directement sur une image proche de la réalité fournie par une caméra.

La solution précédente a été implémentée dans le cadre d'un véhicule automobile mais pourrait aussi être implémentée dans d'autres situations pour lesquelles il faut détecter un emplacement libre pour le rangement d'un objet.

**Revendications**

1. Procédé de détection d'un emplacement pour parquer un véhicule automobile, comprenant une étape de réception de plusieurs images provenant d'une caméra (2) positionnée sur le véhicule automobile (1), et une étape de réception d'une donnée informant de l'avancée du véhicule automobile (1) à partir d'au moins un capteur (3) positionné sur le véhicule automobile (1), et une étape (E3) de calcul de la disparité entre deux images fournies par la caméra (2) pour en déduire la distance d'un obstacle (P, 14, 16) au véhicule automobile (1), **caractérisé en ce qu'**il met en oeuvre un filtrage temporel en ne prenant en compte que les obstacles qui apparaissent sur au moins deux images distinctes obtenues par la caméra (2) à deux instants distincts, et **en ce qu'**il comprend une étape (E41) d'élaboration d'une grille d'occupation comprenant le découpage en plusieurs cases de l'espace vu du dessus, et en l'attribution d'une valeur dans chaque case élaborée à partir des résultats des différents obstacles identifiés à l'étape précédente (E3).

**2.** Procédé de détection d'un emplacement pour parquer un véhicule automobile selon la revendication 1, **caractérisé en ce que** l'étape (E3) de calcul de la disparité entre deux images permet de déduire une estimation de la distance (d) d'un point (P) d'un obstacle à partir des deux coordonnées (u0 et u1) de ce point (P) sur les deux images obtenues par la caméra (2), à partir de la distance focale (f) de la caméra (2) et à partir du déplacement (D) du véhicule entre les deux images, par l'équation f/d = l u1-u0 l/D.

**3.** Procédé de détection d'un emplacement pour parquer un véhicule automobile selon la revendication 1 ou 2, **caractérisé en ce que** la valeur attribuée à un instant à une case donnée à l'étape (E41) correspond à l'accumulation de valeurs obtenues à plusieurs instants différents.

**4.** Procédé de détection d'un emplacement pour parquer un véhicule automobile selon la revendication précédente, **caractérisé en ce qu'**il comprend une étape supplémentaire (E42) de décision de la présence d'un obstacle dans une certaine case de la grille d'occupation quand la valeur attribuée à cette case dépasse un seuil prédéfini.

**5.** Procédé de détection d'un emplacement pour parquer un véhicule automobile selon l'une des revendications précédentes, **caractérisé en ce qu'**il comprend une étape préalable (E1) de correction de la distorsion introduite par l'optique de la caméra (2) sur les bords de l'image, ou une étape préalable (E2) de correction de l'image pour tenir compte du fait que l'orientation de la caméra n'est peut-être pas exactement perpendiculaire à un axe longitudinal avant-arrière du véhicule (1).

**6.** Procédé de détection d'un emplacement pour parquer un véhicule automobile selon l'une des revendications précédentes, **caractérisé en ce qu'**il comprend une étape finale (E5) de détection des places libres (15) compatibles avec le gabarit du véhicule automobile (1).

**7.** Procédé de détection d'un emplacement pour parquer un véhicule automobile selon la revendication précédente, **caractérisé en ce qu'**il comprend une étape supplémentaire d'interface homme machine incluant la mise en valeur sur un écran visualisé par le conducteur d'une place libre (15) sur l'image obtenue par au moins une caméra (2).

**8.** Dispositif de détection d'un emplacement pour parquer un véhicule automobile comprenant au moins une caméra (2) latérale, au moins un capteur (3) permettant de mesurer le déplacement du véhicule automobile, et un calculateur (4), **caractérisé en ce que** le calculateur (4) comprend un programme informatique mettant en oeuvre le procédé selon une des revendications précédentes.

**9.** Véhicule automobile **caractérisé en ce qu'**il comprend un dispositif de détection d'un emplacement pour parquer un véhicule automobile selon la revendication précédente.

**Claims**

**1.** Method for detecting a place for parking a motor vehicle, comprising a step of receiving several images originating from a camera (2) positioned on the motor vehicle (1) and a step of receiving a datum giving information on the progress of the motor vehicle (1) from at least one sensor (3) positioned on the motor vehicle (1) and a step (E3) of computing the disparity between two images supplied by the camera (2) in order to deduce therefrom the distance from an obstacle (P, 14, 16) to the motor vehicle (1), **characterized in that** it uses a time filtering while taking account of only the obstacles that appear in at least two distinct images obtained by the camera (2) at two distinct moments, and **in that** it comprises a step (E41) of generating an occupancy grid comprising the division into several boxes of the space seen from above, and while allocating a value in each box generated from the results of the various obstacles identified in the previous step (E3).

**2.** Method for detecting a place for parking a motor vehicle according to Claim 1, **characterized in that** the step (E3) of computing the disparity between two images makes it possible to deduce an estimate of the distance (d) of a point (P) of an obstacle from two coordinates (u0 and u1) of this point (P) in the two images obtained by the camera (2), based on the focal length (f) of the camera (2) and based on the movement (D) of the vehicle between the two images, by the equation f/d = l u1-u0 l/D.

**3.** Method for detecting a place for parking a motor vehicle according to Claim 1 or 2, **characterized in that** the value allocated at one moment to a given box in step (E41) corresponds to the accumulation of values obtained at several different moments.

**4.** Method for detecting a place for parking a motor vehicle according to the preceding claim, **characterized in that** it comprises an additional step (E42) of deciding of the presence of an obstacle in a certain box of the occupancy grid when the value allocated to this box exceeds a predefined threshold.

5. Method for detecting a place for parking a motor vehicle according to one of the preceding claims, **characterized in that** it comprises a prior step (E1) of correcting the distortion introduced by the lens of the camera (2) on the edges of the image, or a prior step (E2) of correcting the image in order to take account of the fact that the orientation of the camera may not be exactly perpendicular to a longitudinal front-rear axis of the vehicle (1).

6. Method for detecting a place for parking a motor vehicle according to one of the preceding claims, **characterized in that** it comprises a final step (E5) of detecting free spaces (15) compatible with the dimensions of the motor vehicle (1).

7. Method for detecting a place for parking a motor vehicle according to the preceding claim, **characterized in that** it comprises an additional man-machine interface step including the highlighting on a screen viewed by the driver of a free space (15) in the image obtained by at least one camera (2).

8. Device for detecting a place for parking a motor vehicle comprising at least one side camera (2), at least one sensor (3) making it possible to measure the movement of the motor vehicle, and a computer (4), **characterized in that** the computer (4) comprises a computer program using the method according to one of the preceding claims.

9. Motor vehicle, **characterized in that** it comprises a device for detecting a place for parking a motor vehicle according to the preceding claim.

**Patentansprüche**

1. Verfahren zur Erfassung eines Parkplatzes für ein Kraftfahrzeug, umfassend einen Schritt des Empfangens mehrerer von einer an dem Kraftfahrzeug (1) positionierten Kamera (2) gelieferter Bilder und einen Schritt des Empfangens von Daten, die über die Vorwärtsbewegung des Kraftfahrzeugs (1) informieren, von mindestens einem an dem Kraftfahrzeug (1) positionierten Sensor (3) und einen Schritt (E3) des Berechnens der Disparität zwischen zwei von der Kamera (2) gelieferten Bildern, um daraus den Abstand eines Hindernisses (P, 14, 16) zu dem Kraftfahrzeug (1) abzuleiten, **dadurch gekennzeichnet, dass** es eine temporale Filterung durchführt, wobei nur die Hindernisse berücksichtigt werden, die auf mindestens zwei verschiedenen Bildern erscheinen, die von der Kamera (2) zu zwei verschiedenen Zeitpunkten erhalten werden, und dass es einen Schritt (E41) des Bildens eines Belegungsgitters umfasst, der das Zerschneiden des von oben gesehenen Raums in mehrere Felder umfasst, und jedem Feld ein Wert zugeordnet wird, der aus den Ergebnissen der im vorhergehenden Schritt (E3) identifizierten verschiedenen Hindernisse gebildet wird.

2. Verfahren zur Erfassung eines Parkplatzes für ein Kraftfahrzeug nach Anspruch 1, **dadurch gekennzeichnet, dass** der Schritt (E3) des Berechnens der Disparität zwischen zwei Bildern gestattet, eine Schätzung des Abstands (d) eines Punkts (P) von einem Hindernis anhand der beiden Koordinaten (u0 und u1) dieses Punkts (P) auf den beiden von der Kamera (2) erhaltenen Bildern anhand der Brennweite (f) der Kamera (2) und anhand der Bewegung (D) des Fahrzeugs zwischen den beiden Bildern durch die Gleichung f/d = I u1-u0 I/D abzuleiten.

3. Verfahren zur Erfassung eines Parkplatzes für ein Kraftfahrzeug nach Anspruch 1 oder 2, **dadurch gekennzeichnet, dass** der zu einem Zeitpunkt einem in Schritt (E41) erhaltenen Feld zugeordnete Wert einer Akkumulierung von zu mehreren verschiedenen Zeitpunkten erhaltenen Werten entspricht.

4. Verfahren zur Erfassung eines Parkplatzes für ein Kraftfahrzeug nach dem vorhergehenden Anspruch, **dadurch gekennzeichnet, dass** es einen zusätzlichen Schritt (E42) des Entscheidens über das Vorhandensein eines Hindernisses in einem bestimmten Feld des Belegungsgitters, wenn der diesem Feld zugeordnete Wert eine vordefinierte Schwelle überschreitet, umfasst.

5. Verfahren zur Erfassung eines Parkplatzes für ein Kraftfahrzeug nach einem der vorhergehenden Ansprüche, **dadurch gekennzeichnet, dass** es einen vorherigen Schritt (E1) des Korrigierens der durch die Optik der Kamera (2) eingeführten Verzerrung an den Rändern des Bilds oder einen vorherigen Schritt (E2) des Korrigierens des Bildes zur Berücksichtigung der Tatsache, dass die Ausrichtung der Kamera nicht genau senkrecht zu einer von vorne nach hinten verlaufenden Längsachse des Fahrzeugs (1) verlaufen kann, umfasst.

6. Verfahren zur Erfassung eines Parkplatzes für ein Kraftfahrzeug nach einem der vorhergehenden Ansprüche, **dadurch gekennzeichnet, dass** es einen Endschritt (E5) des Erfassens von freien Plätzen (15), die mit den Abmessungen des Kraftfahrzeugs (1) kompatibel sind, umfasst.

7. Verfahren zur Erfassung eines Parkplatzes für ein Kraftfahrzeug nach den vorhergehenden Ansprüchen, **dadurch gekennzeichnet, dass** es einen zusätzlichen Mensch-Maschine-Schnittstellen-Schritt umfasst, der das Auswerten auf einem von dem Fahrzeugführer zu sehenden Bildschirm eines freien Platzes (15) auf dem von mindestens einer Kamera (2) erhaltenen Bild enthält.

8. Vorrichtung zur Erfassung eines Parkplatzes für ein Kraftfahrzeug mit mindestens einer seitlichen Kamera (2), mindestens einem Sensor (3), der das Messen der Bewegung des Kraftfahrzeugs gestattet, und einem Rechner (4), **dadurch gekennzeichnet, dass** der Rechner (4) ein Rechnerprogramm enthält, das das Verfahren nach einem der vorhergehenden Ansprüche durchführt.

9. Kraftfahrzeug, **dadurch gekennzeichnet, dass** es eine Vorrichtung zur Erfassung eines Parkplatzes für ein Kraftfahrzeug nach dem vorhergehenden Anspruch enthält.

# Fig.1

Fig.2

Fig.3

# Fig.4

*Image caméra*

E1

Correction de distorsion

E2

Rectification de
l'orientation de la caméra

Mémorisation

*Image rectifiée (t)*
*Image rectifiée (t-Δt)*

Mesure de disparité
dense

E3

*Carte de disparité*

Calcul de la position
des obstacles

*Tableau d'obstacles*

E41
Accumulation

E4

*Accumulateur*

E42
Seuillage

*Carte de profondeur*

E5
Recherche d'une place
de parking

Fig.5a

Fig.5b

# Fig.6a

# Fig.6b

# Fig.7a

# Fig.7b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2771500
- DE 102006011590

- US 20070165908 A